Europäisches Patentamt

European Patent Office

Office européen des brevets

(19)

(11) **EP 1 222 528 B1**

(12) **FASCICULE DE BREVET EUROPEEN**

(45) Date de publication et mention
de la délivrance du brevet:
**15.10.2003 Bulletin 2003/42**

(21) Numéro de dépôt: **00951657.6**

(22) Date de dépôt: **12.07.2000**

(51) Int Cl.7: **G06F 7/72**

(86) Numéro de dépôt international:
**PCT/FR00/02010**

(87) Numéro de publication internationale:
**WO 01/006351 (25.01.2001 Gazette 2001/04)**

(54) **PROCEDE D'AMELIORATION DE PERFORMANCE DE L'OPERATION DE MULTIPLICATION SUR UN CORPS FINI DE CARACTERISTIQUE 2**

VERFAHREN ZUR LEISTUNGSVERBESSERUNG EINER MULTIPLIZIEROPERATION IN EINEM ENDLICHEN FELD MIT KENNZAHL 2

METHOD FOR IMPROVING THE PERFORMANCE OF A MULTIPLICATION OPERATION ON A FINITE CHARACTERISTIC 2 BODY

(84) Etats contractants désignés:
**DE ES FR GB IT**

(30) Priorité: **15.07.1999 FR 9909317**

(43) Date de publication de la demande:
**17.07.2002 Bulletin 2002/29**

(73) Titulaire: **Gemplus**
**13881 Gémenos Cedex (FR)**

(72) Inventeurs:
• **CORON, Jean-Sébastien**
**F-75015 Paris (FR)**
• **HAN, Yong-Fei**
**Singapore 680274 (SG)**
• **ZHANG, Jiang**
**Singapore 680274 (SG)**

(56) Documents cités:
• **MIYAJI A ET AL: "Efficient elliptic curve exponentiation" INFORMATION AND COMMUNICATIONS SECURITY. FIRST INTERNATIONAL CONFERENCE, ICIS '97. PROCEEDINGS, INFORMATION AND COMMUNICATIONS SECURITY. FIRST INTERNATIONAL CONFERENCE, ICICS '97, BEIJING, CHINA, 11-14 NOV. 1997, pages 282-290, XP000865761 1997, Berlin, Germany, Springer-Verlag, Germany ISBN: 3-540-63696-X**
• **DE WIN E ET AL: "A fast software implementation for arithmetic operations in GF(2)" LECTURE NOTES IN COMPUTER SCIENCE,US,SPRINGER VERLAG, NEW YORK, NY, 1996, pages 65-76, XP002081362 ISSN: 0302-9743**
• **KOÇ Ç K ET AL: "FAST SOFTWARE EXPONENTIATION IN GF(2K)" IEEE SYMPOSIUM ON COMPUTER ARITHMETIC,US,LOS ALAMITOS, CA: IEEE COMP. SOC. PRESS, 6 juillet 1997 (1997-07-06), pages 225-231, XP000788129 ISBN: 0-8186-7846-1**

**Description**

La présente invention concerne un procédé d'amélioration de performance de l'opération de multiplication dans un corps fini de caractéristique deux (corps fini de la forme GF($2^n$), n étant un entier. Cette opération est fréquemment utilisée dans le cadre de la cryptographie à base de courbe elliptique.
Elle est particulièrement destinée à être mise en oeuvre dans des dispositifs électroniques du type carte à puce, PCMCIA, badges, cartes sans contact ou tout autre appareil portable

Dans le modèle classique de la cryptographie à clef secrète, deux personnes désirant communiquer par l'intermédiaire d'un canal non sécurisé doivent au préalable se mettre d'accord sur une clé secrète de chiffrement K. La fonction de chiffrement et la fonction de déchiffrement utilisent la même clef K.
L'inconvénient du système de chiffrement à clé secrète est que ledit système requiert la communication préalable de la clé K entre les deux personnes par l'intermédiaire d'un canal sécurisé, avant qu'un quelconque message chiffré ne soit envoyé à travers le canal non sécurisé. Dans la pratique, il est généralement difficile de trouver un canal de communication parfaitement sécurisé, surtout si la distance séparant les deux personnes est importante. On entend par canal sécurisé un canal pour lequel il est impossible de connaître ou de modifier les informations qui transitent par ledit canal. Un tel canal sécurisé peut être réalisé par un câble reliant deux terminaux, possédés par les deux dites personnes.

Le concept de cryptographie à clef publique fut inventé par Whitfield DIFFIE et Martin HELLMAN en 1976. La cryptographie à clef publique permet de résoudre le problème de la distribution des clefs à travers un canal non sécurisé. Le principe de la cryptographie à clef publique consiste à utiliser une paire de clefs, une clef publique de chiffrement et une clef privée de déchiffrement. Il doit être calculatoirement infaisable de trouver la clef privée de déchiffrement à partir de la clef publique de chiffrement. Une personne A désirant communiquer une information à une personne B utilise la clef publique de chiffrement de la personne B. Seule la personne B possède la clef privée associée à sa clef publique. Seule la personne B est donc capable de déchiffrer le message qui lui est adressé.

Un autre avantage de la cryptographie à clé publique sur la cryptographie à clé secrète est que la cryptographie à clef publique permet l'authentification par l'utilisation de signature électronique.

La première réalisation de schéma de chiffrement à clef publique fut mis au point en 1977 par Rivest, Shamir et Adleman, qui ont inventé le système de chiffrement RSA. La sécurité de RSA repose sur la difficulté de factoriser un grand nombre qui est le produit de deux nombres premiers. Depuis, de nombreux systèmes de chiffrement à clef publique ont été proposés, dont la sécurité repose sur différents problèmes calculatoires :

(cette liste n'est pas exhaustive).

- Sac à dos de Merckle-Hellman :
   Ce système de chiffrement est basé sur la difficulté du problème de la somme de sous-ensembles.

- McEliece :
   Ce système de chiffrement est basé sur la théorie des codes algébriques. Il est basé sur le problème du décodage de codes linéaires.

- ElGamal :
   Ce système de chiffrement est basé sur la difficulté du logarithme discret dans un corps fini.

- Courbes elliptiques :
   Le système de chiffrement à courbe elliptique constitue une modification de systèmes cryptographiques existant pour les appliquer au domaine des courbes elliptiques.

L'utilisation de courbes elliptiques dans des systèmes cryptographiques fut proposé indépendamment par Victor Miller et Neal Koblitz en 1985. Les applications réelles des courbes elliptiques ont été envisagées au début des années 1990. L'avantage de cryptosystèmes à base de courbe elliptique est qu'ils fournissent une sécurité équivalente aux autres cryptosystèmes mais avec des tailles de clef moindres. Ce gain en taille de clé implique une diminution des besoins en mémoire et une réduction des temps de calcul, ce qui rend l'utilisation des courbes elliptiques particulièrement adaptées pour des applications de type carte à puce.

Une courbe elliptique sur un corps fini GF($q^n$) (q étant un nombre premier et n un entier) est l'ensemble des points (x,y) avec x l'abscisse et y l'ordonnée appartenant à GF($q^n$) solution de l'équation :

$$y^2 = x^3 + a*x + b$$

si q est supérieur ou égal à 3
   et

$$y^2 + x*y = x^3 + a*x^2 + b$$

si q=2.

Il existe deux procédés pour représenter un point d'une courbe elliptique :

Premièrement, la représentation en coordonnées affine; dans ce procédé, un point P de la courbe elliptique est représenté par ses coordonnées (x,y). Deuxièmement, la représentation en coordonnées projectives.

L'avantage de la représentation en coordonnées projectives est qu'elle permet d'éviter les divisions dans le corps fini, lesdites divisions étant les opérations les plus coûteuses en temps de calcul.

La représentation en coordonnés projectives le plus couramment utilisée est celle consistant à représenter un point P de la courbe elliptique par les coordonnées (X,Y,Z), telles que $x=X/Z$ et $y=Y/Z^3$.

Les coordonnées projectives d'un point ne sont pas uniques parce que le triplet (X,Y,Z) et le triplet ($\lambda^2{*}X$, $\lambda^3{*}Y$, $\lambda{*}Z$) représentent le même point quelque soit l'élément $\lambda$ appartenant au corps fini sur lequel est défini la courbe elliptique.

Les deux classes de courbes les plus utilisées en cryptographie sont les suivantes :

1) Courbes définies sur le corps fini GF(p) (ensemble des entiers modulo p, p étant un nombre premier) ayant pour équation $y^2=x^3+a{*}x+b$, a et b étant 2 éléments du corps fini GF(p).
2) Courbes définies sur le corps fini GF($2^n$) (ensemble des polynômes de degré inférieur ou égal à n-1 à coefficients 0 ou 1) ayant pour équation

$$y^2+x{*}y=x^3+a{*}x^2+b,$$

a et b étant 2 éléments du corps fini GF($2^n$).

Pour chacune de ces deux classes de courbes, on définit les opérations d'addition de point et de doublement de point.

L'addition de point consiste en l'opération qui étant donné deux points P et Q calcule la somme R=P+Q, R étant un point de la courbe dont les coordonnées s'expriment à l'aide des coordonnées des points P et Q suivant des formules dont l'expression est donnée dans l'ouvrage " Elliptic curve public key cryptosystem " par Alfred J. Menezes. Le doublement de point est l'opération qui, étant donné un point P, calcule le point R=2*P, R étant un point de la courbe dont les coordonnées s'expriment à l'aide des coordonnées du point P suivant des formules dont l'expression est donnée dans l'ouvrage " Elliptic curve public key cryptosystem " par Alfred J. Menezes.

Les opérations sur les coordonnées des points appartenant à la courbe elliptique sont des opérations portant sur des éléments appartenant à un corps fini de type GF(p) ou GF($2^n$). Les opérations définies sur le corps fini sont les 3 opérations suivantes : opération d'addition, opération de multiplication, opération d'inversion.

L'opération de multiplication sur un corps fini du type GF($2^n$) est généralement constituée de deux étapes, la première étape consistant en la multiplication des deux polynômes représentant les deux éléments appartenant au corps fini, la deuxième étape consistant en la réduction modulaire du polynôme obtenu.

L'opération traditionnelle de multiplication de deux polynômes représentant deux éléments définis sur un corps fini GF($2^n$) consiste en les opérations suivantes, l'algorithme prenant en entrée deux éléments a et b appartenant au corps fini GF($2^n$), $a=a(n-1){*}t^{(n-1)}+...+a(1){*}t+a(0)$ et $b=b(n-1){*}t^{(n-2)}+...+b(1){*}t+b(0)$, t étant le coefficient indéterminé du polynôme, les coefficients a(i) et b(i) pour i compris entre 0 et n-1 étant égaux à 0 ou à 1 :

1) Initialiser la variable c à 0.
2) Pour i allant de n-1 à 0 faire

2)a) Remplacer c par t*c
2)b) Si a(i) est différent de 0, ajouter le polynôme b au polynôme c.

3) Renvoyer en sortie le polynôme c.

L'inconvénient de l'algorithme précédent est qu'il nécessite une opération de rotation du polynôme c lors de l'exécution de l'opération 2)a). Si le polynôme c est représenté sur des registres comprenant w bits, chaque opération de rotation du polynôme nécessite approximativement 2*n/w rotations de registre. Le nombre total de rotations de registre lors de l'exécution de l'algorithme précédant est donc approximativement 2*n*n/w.

Le procédé de l'invention consiste en un procédé cryptographique de multiplication améliorée de deux éléments d'un corps fini de caractéristique 2 (corps fini de la forme GF($2^n$)) destiné à être implémenté dans un dispositif électronique portable comprenant d'une part un procédé amélioré de multiplication de polynômes et d'autre part un procédé amélioré de réduction modulaire, ledit procédé amélioré de multiplication de polynômes prenant en entrée deux polynômes a et b représentant un élément d'un corps fini de type GF($2^n$), notés $a=a(n-1){*}t^{(n-1)}+...+a(1){*}t+a(0)$ et $b=b(n-1){*}t^{(n-2)}+...+b(1){*}t+b(0)$, les coefficients a(i) et b(i) pour i compris entre 0 et n-1 étant égaux à 0 ou 1, ledit procédé utilisant comme variable de calcul un polynôme c, les registres de la représentation des polynômes c et a étant notés respectivement C[j] et A[j] pour le registre numéro j, le nombre de bits dans chaque registre étant noté w, le nombre de registres nécessaires à la représentation d'un polynôme étant noté s, ledit procédé amélioré de réduction modulaire prenant en entrée un polynôme a noté $a=a(2{*}n-1){*}t^{(2{*}n-1)}+...+a(1){*}t+a(0)$ de degré inférieur ou égal à 2*n-1 et renvoyant en sortie un élément c du corps fini GF($2^n$) noté $c=c(n-1){*}t^{(n-2)}+...+c(1){*}t+c(0)$, les coefficients a(i) et c(i) pour i compris entre 0 et 2*n-1 étant égaux à 0 ou 1, les registres de la représentation des polynômes c et a étant notés respectivement C[j] et A[j] pour le registre numéro j, le nombre de bits dans chaque registre étant noté w, le nombre de registres nécessaires à la représentation d'un polynôme étant noté s, le polynôme utilisé lors de la réduction modulaire étant de la forme $t^n+t^{k+1}$, k étant un paramètre entier, le nombre de registres nécessaires à la représentation d'un polynôme étant noté s, caractérisé en ce que ledit procédé amélioré de multiplication de polynômes comprend les cinq étapes suivantes :

1) Initialisation du polynôme c à 0.
2) Pour j allant de w-1 à 0 exécuter les étapes 2), 3) et 4) suivantes :

2)a) Pour k allant de 1 à s exécuter l'opération 2)b)
2)b) Si b(k*w-1)=1 alors exécuter la sous étape suivante :

Pour i allant de s-1+k-1 à k-1 remplacer le registre C[i] par le résultat de l'opération de ou exclusif entre le registre C[i] et le registre A[i-k+1]
3) Décaler les registres représentant le polynôme c d'un bit vers la gauche
4) Décaler les registres représentant le polynôme b d'un bit vers la gauche
5) Renvoyer en sortie le polynôme c, et

en ce que ledit procédé amélioré de réduction modulaire comprend les dix huit étapes suivantes :

1) Calculer p=n-k modulo w
2) Calculer q=(n-k)/w
3) Initialiser les variables temp1 et temp2 à 0
4) Décaler les registres A[2*s-1] à A[2*s-1-s/2] de p bits vers la droite.
5) Décaler la variable templ de un bit vers la droite.
6) Pour j allant de 2*s-1 à 2*s-1-s/2 remplacer A[j-q] par A[j-q] xor A[j]
7) Remplacer A[2*s-1-s/2-q-1] par A[2*s-1-s/2-q-1] xor temp1
8) Décaler les registres A[2*s-1] à A[2*s-1-s/2] de p bits vers la droite.
9) Décaler la variable temp1 de un bit vers la droite.
10) Pour j allant de s-1+s/2 à s remplacer A[j-q] par A[j-q] xor A[j]
11) Remplacer A[s-q-1] par A[s-q-1] xor temp1
12) Initialiser mask à (-1) << (n mod w), l'opération << (n mod w) dénotant la rotation de n mod w bits vers la gauche.
13) Remplacer temp1 par A[s-1] and mask.
14) Pour i allant de p à 1 faire

14)a) Décaler le polynôme temp1 de 1 bit vers la droite
14)b) Décaler le polynôme temp2 de 1 bit vers la droite
15) Remplacer A[(s-1)-q] par A[(s-1)-q] xor temp1
16) Remplacer A[(s-1)-q-1] par A[(s-1)-q-1] xor temp2
17) Remplacer C[i] par A[i] pour i allant de 0 à s-1
18) Renvoyer en sortie le polynôme c.

Le nombre de rotations de polynômes nécessaires pour l'exécution de l'algorithme est donc approximativement égal à 2*n, ce qui représente une accélération par rapport à l'algorithme de multiplication classique.

Les procédés de multiplication de polynômes et de réduction modulaire décrits précédemment permettent donc d'améliorer l'efficacité du procédé de multiplication de deux éléments dans un corps fini de caractéristique 2.

**Revendications**

1. procédé cryptographique de multiplication améliorée de deux éléments d'un corps fini de caractéristique 2, corps fini de la forme GF($2^n$), destiné à être implémenté dans un dispositif électronique portable comprenant d'une part un procédé amélioré de multiplication de polynômes et d'autre part un procédé amélioré de réduction modulaire, ledit procédé amélioré de multiplication de polynômes prenant en entrée deux polynômes a et b représentant un élément d'un corps fini de type GF($2^n$), notés a=a(n-1)*$t^{(n-1)}$ +...+a(1)*t+a(0) et b=b(n-1)*$t^{(n-2)}$ +...+b(1)*t+b(0), les coefficients a(i) et b(i) pour i compris entre 0 et n-1 étant égaux à 0 ou à 1, ledit procédé utilisant comme variable de calcul un polynôme c, les registres de la représentation des polynômes c et a étant notés respectivement C[j] et A[j] pour le registre numéro j, le nombre de bits dans chaque registre étant noté w, le nombre de registres nécessaires à la représentation d'un polynôme étant noté s, ledit procédé amélioré de réduction modulaire prenant en entrée un polynôme a noté a=a(2*n-1)*$t^{(2*n-1)}$ +...+a(1)*t+a(0) de degré inférieur ou égal à 2*n-1 et renvoyant en sortie un élément c du corps fini GF($2^n$) noté c=c(n-1)*$t^{(n-2)}$ +...+c(1) *tc(0), les coefficients a(i) et c(i) pour i compris entre 0 et 2*n-1 étant égaux à 0 ou à 1, les registres de la représentation des polynômes c et a étant notés respectivement C[j] et A[j] pour le registre numéro j, le nombre de bits dans chaque registre étant noté w, le nombre de registres nécessaires à la représentation d'un polynôme étant noté s, le polynôme utilisé lors de la réduction modulaire étant de la forme $t^n+t^{k+1}$, k étant un paramètre entier, le nombre de registres nécessaires à la représentation d'un polynôme étant noté s, **caractérisé en ce que** ledit procédé amélioré de multiplication de polynômes comprend les cinq étapes suivantes :

1) Initialisation du polynôme c à 0.
2) Pour j allant de w-1 à 0 exécuter les étapes 2), 3) et 4) suivantes :

2)a) Pour k allant de 1 à s exécuter l'opération 2)b)

2)b) Si b(k*w-1)=1 alors exécuter la sous étape suivante :

Pour i allant de s-1+k-1 à k-1 remplacer le registre C[i] par le résultat de l'opération de ou exclusif entre le registre C[i] et le registre A[i-k+1]

3) Décaler les registres représentant le polynôme c d'un bit vers la gauche

4) Décaler les registres représentant le polynôme b d'un bit vers la gauche

5) Renvoyer en sortie le polynôme c,

et **en ce que** ledit procédé amélioré de réduction modulaire comprend les dix huit étapes suivantes :

1) Calculer p=n-k modulo w

2) Calculer q=(n-k)/w

3) Initialiser les variables temp1 et temp2 à 0

4) Décaler les registres A[2*s-1] à A[2*s-1-s/2] de p bits vers la droite.

5) Décaler la variable temp1 de un bit vers la droite.

6) Pour j allant de 2*s-1 à 2*s-1-s/2 remplacer A[j-q] par A[j-q] xor A[j]

7) Remplacer A[2*s-1-s/2-q-1] par A[2*s-1-s/2-q-1] xor temp1

8) Décaler les registres A[2*s-1] à A[2*s-1-s/2] de p bits vers la droite.

9) Décaler la variable temp1 de un bit vers la droite.

10) Pour j allant de s-1+s/2 à s remplacer A[j-q] par A[j-q] xor A[j]

11) Remplacer A[s-q-1] par A[s-q-1] xor temp1

12) Initialiser mask à (-1) <<(n mod w), l'opération << (n mod w) dénotant la rotation de n mod w bits vers la gauche.

13) Remplacer temp1 par A[s-1] and mask.

14) Pour i allant de p à 1 faire

14)a) Décaler le polynôme temp1 de 1 bit vers la droite

14)b) Décaler le polynôme temp2 de 1 bit vers la droite

15) Remplacer A[(s-1)-q] par A[(s-1)-q] xor temp1

16) Remplacer A[(s-1)-q-1] par A[(s-1)-q-1] xor temp2

17) Remplacer C[i] par A[i] pour i allant de 0 à s-1

18) Renvoyer en sortie le polynôme c.

2. Dispositif électronique utilisant le procédé selon la revendication 1 **caractérisé en ce qu'**il est un dispositif portable.

**Patentansprüche**

1. Kryptographisches Verfahren zur verbesserten Multiplikation von zwei Elementen eines finiten Körpers der Eigenschaft 2, finiter Körper der Form GF ($2^n$), dazu bestimmt, in ein tragbares elektronisches Gerät implementiert zu werden, das einerseits ein verbessertes Verfahren zur Multiplikation von Polynomen und andererseits ein verbessertes Verfahren zur modularen Reduktion enthält, wobei dieses verbesserte Verfahren zur Multiplikation von Polynomen als Eingang zwei Polynome a und b nimmt, die ein Element eines finiten Körpers vom Typ GF ($2^n$) darstellen, angegeben mit $a=a(n-1)*t^{(n-1)}+...+a(1)*t+a(0)$ und $b=b(n-1)*t^{(n-1)}+...+b(1)*t+b(0)$, wobei die Koeffizienten a(i) und b(i) bei i zwischen 0 und n-1 gleich 0 oder 1 sind, wobei dieses Verfahren als Berechnungsvariable ein Polynom c verwendet, wobei die Register der Darstellung der Polynome c und a C[j] und A[j] für das Register Nummer j angegeben werden, die Anzahl Bit in jedem Register mit w angegeben wird, die Anzahl der für die Darstellung eines Polynoms erforderlichen Register mit s angegeben wird, wobei dieses verbesserte Verfahren zur modularen Reduzierung mit einem Polynom als Eingang mit $a=a(2*n-1)*t^{(2*n-1)}+...+a(1)*t+a(0)$ den Grad kleiner oder gleich 2+n-1 bezeichnet hat und als Ausgang ein Element c des finiten Körpers GF(2n) als $c=c(n-1)+t^{(n-2)}+...+c(1)*2+c(0)$ zurücksendet, wobei die Koeffizienten a(i) und c(i) bei i zwischen 0 und 2+n-1 gleich 0 oder 1 sind, wobei die Register der Darstellung der Polynome c und a C[j] und A[j] für das Register Nummer j angegeben werden, die Anzahl Bit in jedem Register mit w angegeben wird, die Anzahl der für die Darstellung eines Polynoms erforderlichen Register mit s angegeben wird, wobei das bei der modularen Reduzierung verwendete Polynom das Format $t^n+t^{k+1}$ hat, wobei k ein ganzer Parameter ist, die Anzahl der für die Darstellung eines Polynoms erforderlichen Register mit s angegeben wird, **dadurch gekennzeichnet, dass** dieses verbesserte Verfahren zur Multiplikation von Polynomen die folgenden fünf Stufen umfasst:

1) Initialisierung des Polynoms c mit 0.

2) Bei j von w-1 bis 0 Ausführung der folgenden Stufen 2), 3) und 4):

2)a) bei k von 1 bis 2, Ausführung der Operation 2)b)

2)b) wenn b(k+w-1)=1, dann Ausführung der folgenden Unterstufe: bei i von s-1+k-1 bis k-1 Ersetzen des Registers C[i] durch das Ergebnis der Operation von oder exklusiv zwischen dem Register C[i] und dem Register A[ik+1].

3) die Register, die das Polynom c darstellen, um ein Bit nach links verschieben

4) die Register, die das Polynom b darstellen, um ein Bit nach links verschieben

5) das Polynom c zum Ausgang zurücksenden,

und dadurch, dass dieses verbesserte Verfahren zur modularen Reduktion die folgenden achtzehn Stufen enthält:

1) p=n-k modulo w berechnen

2) q=(n-k)/w berechnen

3) Die Variablen temp1 und temp2 bei 0 initialisieren

4) Die Register A[2*s-1] bis A[2*s-1-s/2] um p bit nach rechts verschieben

5) Die Variable temp1 um ein Bit nach rechts verschieben

6) Bei j von 2*s-1 bis 2*s-1-s/2, A[j-q] durch A[j-q] xor A[j] ersetzen

7) A[2*s-1-s/2-q-1] durch A[2*s-1-s/2-q-1] xor temp1 ersetzen

8) Die Register A[2*s-1] bis A[2*s-1-s/2] um p bit nach rechts verschieben

9) Die Variable temp1 um ein Bit nach rechts verschieben

10) Bei j von s-1+s/2 bis s, A[j-q] durch A[j-q] xor A[j] ersetzen

11)A[s-q-1] durch A[s-q-1] xor temps1 ersetzen

12) Mask bei (-1) << (n mod w) initialisieren, wobei die Operation << (n mod w) die Drehung von n mod w Bits nach links anzeigt

13) temp1 durch A[s-1] and mask ersetzen

14) Bei i von p bis 1:

14) a) das Polynom temp1 um 1 Bit nach rechts verschieben

14) b) das Polynom temp2 um 1 Bit nach rechts verschieben

15) A[(s-1)-q] durch A[(s-1)-q] xor temp1 ersetzen

16) A((s-1)q-1] durch A[(s-1)-q-1] xor temp2 ersetzen

17) C[i] durch A[i] bei i von 0 bis s-1 ersetzen

18) das Polynom c zum Ausgang zurücksenden.

2. Elektronische Vorrichtung unter Verwendung des Verfahrens nach Anspruch 1, **dadurch gekennzeichnet, dass** es sich um eine tragbare Vorrichtung handelt.

## Claims

1. Improved cryptographic method for multiplication of two elements of a finite body of characteristic 2, finite body of the form GF ($2^n$), designed to be implemented in a portable electronic device comprising an improved method of multiplication of polynomials and an improved method of modular reduction, said improved method of multiplication of polynomials using as input two polynomials a and b representing an element of a finite body of type GF ($2^n$), denoted $a = a (n - 1) * t^{(n-1)} + ... + a (1) * t + a (0)$ and $b = b(n- 1) * t^{(n-2)} + ... + b (1) * t + b (0)$, the coefficients a (i) and b (i) for I ranging between 0 and n - 1 being equal to 0 or to 1, said method using as a calculation variable a polynomial c, the registers of the representation of the polynomials c and a being denoted C [j] and A [ j ] respectively for register number j, the number of bits in each register being denoted w, the number of registers necessary for the representation of a polynomial being denoted s, said improved method of modular reduction using as input a polynomial a denoted $a = a (2 * n - 1) * t^{(2*n-1)} + ... + a (1) * t + a (0)$ of degree less than or equal to 2 * n - 1 and sending to the output an element c of the finite body GF ($2^n$) denoted $c = c (n - 1) * {(n-2)} + ... + c (1) * t + c (0)$, coefficients a (i) and c (i) ranging between 0 and 2 * n - 1 being equal to 0 or to 1, the registers of the representation of the polynomials c and a being denoted C [j] and A [j] respectively for register number j, the number of bits in each register being denoted w, the number of registers necessary for the representation of a polynomial being denoted s, the polynomial used during the modular reduction being of the form $t^n + t^{k+1}$, where k is an integer parameter, the number of registers necessary for the representation of a polynomial being denoted s, **characterized in that** said improved method of multiplication of polynomials comprises the following five steps:

1. Initialization of polynomial c at 0.

2. For j going from w - 1 to 0 execution of the following steps 2), 3) and 4):

2)a) For k going from 1 to s execution of operation 2)b)

2)b) If b (k * w - 1) = 1 then execution of the following sub-step: For i going from s-1+k-1 1 to k - 1 replace register C [i] by the result of the operation of exclusive or (XOR) between register C [i] and register A [i - k + 1]

3. Shift the registers representing the polynomial c by one bit leftward

4. Shift the registers representing the polynomial b by one bit leftward

5. Send polynomial c to the output,

and **in that** said improved method of modular reduction comprises the following eighteen steps:

1) Calculate p = n - k modulo w.

2) Calculate q = (n - k) / w.

3) Initialize the variables tempi and temp 2 at 0.

4) Shift the registers A [2 * s - 1] to A [2 * s - 1 - s / 2] by p bits rightward.

5) Shift the variable tempi by one bit rightward.

6) For j going from 2*s-1 to 2 * s - 1 - s / 2 replace A [j-q] by A [j-q] xor A [j].

7) Replace A [2 * s - 1 - s / 2 - q - 1] by A [2 * s - 1 - s / - q -1] xor temp1.

8) Shift the registers A [2 * s - 1] to Replace A [2 * s -1 - s / 2] by p bits rightward.

9) Shift variable tempi by one bit rightward.

10) For j going from s - 1 + s / 2 to s replace A [j - q] by A [j - q] x or A [j].

11) Replace A [s - q - 1 ] by A [s - q - 1] xor temp1.

12) Initialize mask at (-1) << (n mod w), the operation << (n mod w) denoting the rotation of n mod w bits leftward.

13) Replace Tempi by A [s - 1] and mask.

14) For i going from p to 1

14)a) Shift polynomial tempi by one bit rightward.

14)b) Shift polynomial temp2 by one bit rightward.

15) Replace A [(s - 1) - q by A[(s - 1) - q] xor temp1.

16) Replace A [(s - 1) - q -1) by A [(s - 1) - q - 1] xor temp2.

17) Replace C [i] by A[l] for i going from 0 to s - 1.

18) Send polynomial c to the output.

2. Electronic device using the method of claim 1 **characterized in that** it is a portable device.